# EUROPÄISCHE PATENTSCHRIFT

(11) **EP 1 330 139 B1**
(45) Veröffentlichungstag und Bekanntmachung des Hinweises auf die Patenterteilung: **10.08.2005**
(21) Anmeldenummer: 02090392.8
(22) Anmeldetag: 25.11.2002
(51) Int. Cl.: H04Q 7/38, H04Q 7/22

(54) **Aufbau einer Kommunikationsverbindung zwischen einem Mobilfunk-Kommunikationsendgerät und einem gemäss des IP Protokolls arbeitenden Kommunikationsendgerät**
Method to establish a communication connection between a mobile communication device and an IP based communication device
Méthode pour établir une liaison de communication entre un appareil mobile et un dispositif reposant sur un protocol d'internet (IP)

(30) Priorität: 21.01.2002 DE 10203199
(43) Veröffentlichungstag der Anmeldung: 23.07.2003
(73) Patentinhaber: SIEMENS AKTIENGESELLSCHAFT, 80333 München (DE)
(72) Erfinder: Aschir, Alexander, 81541 München (DE)

(56) Entgegenhaltungen:
- WO-A-99/12365
- 3GPP: "3GPP TS 23.228 V5.1.0" 3GPP TS 23.228 V5.1.0, XX, XX, Juni 2000 (2000-06), Seiten 1-135, XP002213956

## Beschreibung

Die Erfindung betrifft ein Verfahren zum Veranlassen eines Herstellens einer Kommunikationsverbindung zwischen einem Mobil-Kommunikationsendgerät eines Mobilfunknetzes und einem Partner-Kommunikationsendgerät eines gemäß des Internet-Protokolls arbeitenden Kommunikationsnetzes.

Im Bereich der Telekommunikation sind verschiedene Arten von Nachrichtennetzen bekannt. Dazu gehören einerseits Nachrichtennetze, die auf dem zentralen Zeichengabesystem Nr. 7 (Common Channel Signaling System No.7-CCS7) basieren, welche gelegentlich als "klassische" Netze bezeichnet werden. Dazu gehören Telefon-Festnetze (PSTN = Public Switched Telephone Network) und Telefon-Mobilfunknetze (PLMN = Public Land Mobile Network). In der Vergangenheit wurde eine sprachbasierte Kommunikation vorrangig über diese "klassischen" Netze geführt. In diesen Netzen werden die Teilnehmer über Telefon-Rufnummern adressiert, die auch als E.164-Nummern bezeichnet werden. Andererseits sind auch Netze bekannt, die auf dem Internetprotokoll (IP = Internet Protcol) basieren. Die Sprachübertragung über derartige IP-Netze, welche als "Voice over IP" (VoIP) bezeichnet wird, findet mehr und mehr Verbreitung. In diesen Netzen werden die Teilnehmer über Adressen angesprochen, welche mit dem Internetprotokoll konform sind; dazu gehören Internet-Adressen und Email-Adressen.

Ein Teilnehmer eines "klassischen" Netzes kann nicht ohne weiteres eine Sprachverbindung zu einem Teilnehmer eines auf dem Internet-Protokoll basierenden Netzes (IP-Netze) aufbauen, da in den "klassischen" Netzen IP-konforme Adressen (IP-Adressen) nicht verarbeitet werden können.

Aus der internationalen Patentanmeldung WO 99/12365 ist ein Verfahren zum Herstellen einer Internet-Telefonverbindung bekannt, bei dem eine SMS-Nachricht genutzt wird, um von einem Mobiltelefon Informationen über eine Internetadresse an einen Internet-Server zu übermitteln. Daraufhin wird eine weitere SMS-Nachricht an das Mobiltelefon zurückgesendet, wobei die weitere SMS-Nachricht eine Telefonnummer des Servers enthält. Nach Empfang der zweiten SMS-Nachricht kann ein Nutzer des Mobiltelefons die Telefonnummer des Servers anrufen.

Aus der Schrift 3GPP TS 23.228 V5.1.0 (2001-06); Technical Specification; 3rd Generation Partnership Project; Technical Specification Group Services and System Aspects; IP Multimedia (IM) Subsystem - Stage 2; (Release 5) ist ein Verfahren bekannt, bei dem zwischen zwei sich in einem Kommunikationsnetz befindenden Endgeräten eine Kommunikationsverbindung aufgebaut wird, indem SIP-Nachrichten zwischen den Endgeräten ausgetauscht werden.

Der Erfindung liegt die Aufgabe zugrunde, ein Verfahren anzugeben, mit dem zwischen einem Teilnehmer eines Telefon-Mobilfunknetzes und einem Teilnehmer eines IP-Kommunikationsnetzes eine Sprachkommunikationsverbindung auf Initiative des Teilnehmers des Telefon-Mobilfunknetzes aufgebaut werden kann.

Diese Aufgabe wird erfindungsgemäß gelöst, durch ein Verfahren zum Veranlassen eines Herstellens einer Kommunikationsverbindung zwischen einem Mobil-Kommunikationsendgerät eines Mobilfunknetzes und einem Partner-Kommunikationsendgerät eines gemäß des Internet-Protokolls (IP) arbeitenden Kommunikationsnetzes, wobei dem Mobil-Kommunikationsendgerät eine Rufnummer des Mobilfunknetzes und dem Partner-Kommunikationsendgerät eine IP-Adresse des Kommunikationsnetzes zugeordnet ist, bei dem von einem mit dem Mobilfunknetz verbundenen Dienstknoten eine von dem Mobil-Kommunikationsendgerät ausgesandte Textnachricht empfangen wird, welche die IP-Adresse enthält, und von dem Dienstknoten eine die Rufnummer und die IP-Adresse beinhaltende Auftragsnachricht an das Kommunikationsnetz gesendet wird, wodurch das Kommunikationsnetz veranlasst wird, die Kommunikationsverbindung zwischen dem Mobil-Kommunikationsendgerät und dem Partner-Kommunikationsendgerät herzustellen. Bei dem erfindungsgemäßen Verfahren wird das Kommunikationsnetz veranlasst, die Kommunikationsverbindung herzustellen, indem von dem Dienstknoten aufgrund der IP-Adresse eine Steuereinheit des Kommunikationsnetzes ermittelt wird, von dem Dienstknoten die Auftragsnachricht an diese Steuereinheit gesendet wird, wodurch die Steuereinheit beauftragt wird, das der IP-Adresse zugeordnete Partner-Kommunikationsendgerät zu ermitteln, einen das Mobilfunknetz und das Partner-Kommunikationsnetz verbindenden Verbindungsknoten zu ermitteln, und den Verbindungsknoten zu veranlassen, die Kommunikationsverbindung herzustellen.

Hierbei ist die Rufnummer des Mobilfunknetzes die üblicherweise an Mobiltelefonen eingebbare E.164- Rufnummer; unter IP-Adresse des Kommunikationsnetzes soll eine Adresse verstanden werden, welche in gemäß des Internet-Protokolls (IP) arbeitenden Kommunikationsnetzen dazu verwendet wird, Teilnehmer zu adressieren. Bei einer derartigen IP-Adresse kann es sich beispielsweise um aus dem World Wide Web (WWW) bekannte Internet-Adressen handeln oder auch um aus dem Bereich der E-Mail-Kommunikation bekannte E-Mail-Adresssen.

Bei dem erfindungsgemäßen Verfahren ist es besonders vorteilhaft, dass die IP-Adresse in Textform (z.B. als Textstring innerhalb der Textnachricht) zu den Dienstknoten übertragen wird. Dadurch ist es möglich, innerhalb des Mobilfunknetzes auch solche Adressen zu übertragen, welche in diesem Mobilfunknetz nicht als Adressen erkannt und nicht als solche anwendbar sind. Die IP-Adresse wird gleichsam als Text in dem Mobilfunknetz transportiert, ohne dass von den Vermittlungsstellen erkannt wird, dass der Text eine Adresse darstellt.

Weiterhin ist besonders vorteilhaft, dass die Steuereinheit des Kommunikationsnetzes beauftragt wird, die Kommunikationsverbindung zwischen den Mobil-Kommunikationsendgerät des Mobilfunknetzes und dem Partner-Kommunikationsendgerät des Kommunikationsnetzes aufzubauen. Die Steuereinheit ist dazu in der Lage, weil sie als Einheit des Kommunikationsnetzes (im Gegensatz zu Einheiten des Mobilfunknetzes) sowohl IP-Adressen als auch MobilfunkRufnummern zur Adressierung verarbeiten kann.

Bei dem erfindungsgemäßen Verfahren kann die Textnachricht neben der IP-Adresse auch die Rufnummer enthalten. Hierbei ist vorteilhaft, dass mit einer einzigen Textnachricht sowohl die IP-Adresse als auch die Rufnummer zu dem mit dem Mobilfunknetz verbundenen Dienstknoten übertragen werden kann und der Dienstknoten nach Erhalt dieser Nachricht sowohl über die benötigte IP-Adresse als auch über die Rufnummer verfügt.

Das Verfahren kann aber auch so ausgestaltet sein, dass unter Benutzung von in der Textnachricht enthaltenen Absenderdaten von dem Dienstknoten aus einem Datenspeicher des Mobilfunknetzes die Rufnummer ausgelesen wird. Bei dieser Ausgestaltungsform braucht vorteilhafterweise die Rufnummer überhaupt nicht zu dem Mobilfunknetz übertragen werden, stattdessen wird die Rufnummer aus einem Datenspeicher des Mobilfunknetzes ausgelesen.

Bei dem erfindungsgemäßen Verfahren kann als Textnachricht eine "Short Message" (SMS) genannte schriftliche Kurznachricht verwendet werden. Hierbei wird vorteilhafterweise das bekannte Short Message-(SMS) System verwendet, um die Textnachricht zu dem Dienstknoten zu übertragen. Durch Benutzung dieses bekannten Systems für eine neue Funktion ist eine besonders einfache, unaufwendige und preisgünstige Realisierung des erfindungsgemäßen Verfahrens möglich.

Dabei kann das Verfahren so realisiert werden, dass die von dem Mobil-Kommunikationsendgerät ausgesandte Kurznachricht bei einem Kurznachricht-Dienstzentrum des Mobilfunknetzes eintrifft, und von diesem Kurznachricht-Dienstzentrum aufgrund des Vorliegens der IP-Adresse in der Kurznachricht die Kurznachricht zu dem Dienstknoten weitergeleitet wird. Hierbei werden vorteilhafterweise ebenfalls bereits existierende Einrichtungen des Mobilfunknetzes - z.B. das Kurznachricht-Dienstzentrum - zum Transport der Textnachricht benutzt.

Das erfindungsgemäße Verfahren kann jedoch auch so ausgestaltet sein, dass als Textnachricht eine "USSD-String" genannte Zeichenkette verwendet wird.

Dies kann so realisiert werden, dass die von dem Mobil-Kommunikationsendgerät ausgesandte Zeichenkette bei einer Vermittlungsstelle des Mobilfunknetzes eintrifft, und von dieser Vermittlungsstelle aufgrund einer USSD-Kennung (z.B. eines USSD-Service-Codes) der Zeichenkette die Zeichenkette zu dem Dienstknoten weitergeleitet wird. Bei den beiden vorgenannten Ausführungsformen ist insbesondere vorteilhaft, dass das bekannte System der USSD-String-Übertragung benutzt wird, um die Textnachricht an den Dienstknoten zu übertragen. Damit ist es mit einem an sich bekannten Datenübertragungsmechanismus einfach und preisgünstig möglich, die Textnachricht an den Dienstknoten zu übersenden.

Bei dem erfindungsgemäßen Verfahren kann als Textnachricht eine Seitennachricht eines WAP-Dienstes verwendet werden.

Bei Verwendung einer WAP-Seitennachricht als Textnachricht ist eine besonders komfortable Eingabe der IP-Adresse und gegebenenfalls auch der Rufnummer auf Seiten des Mobilkommunikations-Endgerätes möglich. Beispielsweise kann die Rufnummer und die IP-Adresse in eine Eingabemaske eingegeben werden, welche durch die WAP-Seite auf einer Anzeigeeinheit des Mobilkommunikations-Endgerätes erzeugt wird.

Zur weiteren Erläuterung der Erfindung sind in Figuren 1 bis 3 schematische Darstellungen von Ausführungsbeispielen des erfindungsgemäßen Verfahrens dargestellt. Dabei zeigt
Figur 1 ein Ausführungsbeispiel, bei dem als Textnachricht eine Short Message-Nachricht übertragen wird,
Figur 2 ein Ausführungsbeispiel, bei dem als Textnachricht ein USSD-String übertragen wird und
Figur 3 ein Ausführungsbeispiel, bei dem als Textnachricht eine WAP-Seite übertragen wird.

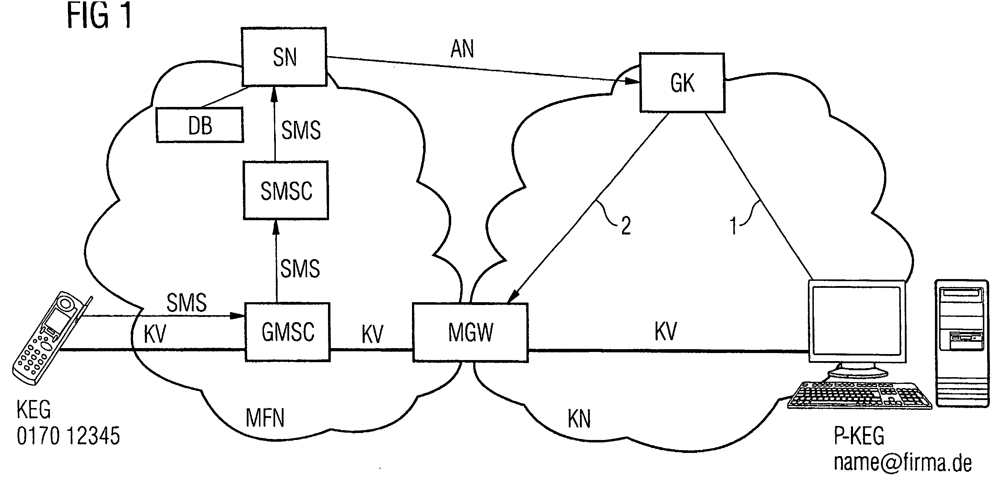

In Figur 1 ist auf der linken Seite schematisch ein Mobilfunknetz MFN dargestellt, bei dem es sich um ein Mobilfunknetz der zweiten Generation (z.B. ein GSM-Netz) handeln kann. Ein Benutzer dieses Mobilfunknetzes MFN verfügt über ein Mobil-Kommunikationsendgerät KEG, welchem eine Mobilfunk-Rufnummer (0170 12345) zugeordnet ist. Diese Mobilfunkrufnummer dient dazu, das Mobil-Kommunikationsendgerät KEG in dem _{M}o-bilfunknetz MFN zu adressieren.

Auf der rechten Seite der Figur 1 ist ein Kommunikationsnetz KN dargestellt, welches auf der Grundlage des Internetprotokolls (IP = Internet Protocol) arbeitet. Bei dem Kommunikationsnetz KN kann es sich beispielsweise um ein sog. IP-Netz, welches auch als H.323-Netz bezeichnet wird, handeln. Speziell kann es sich dabei um das Internet, um das "Word Wide Web" als einen Teil des Internets oder um ein firmeninternes Intranet handeln. An das Kommunikationsnetz KN ist ein Partner-Kommunikationsendgerät P-KEG in Form eines Rechners angeschlossen. Diesem Partner-Kommunikationsendgerät P-KEG ist eine IP-Adresse zugeordnet, diese IP-Adresse kann beispielsweise die Form der Email-Adresse "Name@firma.de" besitzen. Die IP-Adresse stellt also eine alphanumerische Zeichenfolge dar und dient dazu, den Rechner bzw. einen Nutzer des Rechners in dem Kommunikationsnetz KN zu adressieren. Das Kommunikationsnetz KN ist mit dem Mobilfunknetz MFN durch einen Verbindungsknoten MGW (MGW = Media Gateway) verbunden.

Wenn ein Nutzer des Kommunikationsendgeräts KEG eine Kommunikationsverbindung zu dem Partner-Kommunikationsendgerät P-KEG (bzw. zu einem Nutzer dieses Partner-Kommunikationsendgerätes) herstellen möchte, so erzeugt er eine Textnachricht in Form einer SMS-Nachricht SMS, welche die IP-Adresse des Partner-Kommunikationsendgerätes bzw. des Nutzes dieses Partner-Kommunikationsendgerätes und die "eigene Rufnummer" (also die des Mobil-Kommunikationsendgerätes KEG) enthält. Diese schriftliche Kurznachricht SMS wird in bekannter Art und Weise z.B. über eine Vermittlungsstelle GMSC (GMSC = Gateway Mobile Switching Center) zu einem Kurznachrichtdienstzentrum SMSC (SMSC = Short Message Service Center) gesendet. Das Kurznachrichtdienstzentrum SMSC erkennt z.B. aus dem Inhalt der Short Message Nachricht (also z.B. aus dem Vorhandensein der IP-Adresse) oder aus einem mit der Short Message Nachricht mitgesandten Erkennungszeichen, dass von Seiten des _{M}o-bil-Kommunikationsendgerätes eine Kommunikationsverbindung zu einem Partner-Kommunikationsendgerät hergestellt werden soll. Daraufhin leitet das Kurznachrichtdienstzentrum SMSC die Kurznachricht SMS an einen Dienstknoten SN (SN = Service Node) weiter, welcher als Dienst das Veranlassen des Herstellens von Kommunikationsverbindungen ausführt. Bei einem derartigen Dienstknoten SN kann es sich beispielsweise um einen Dienstesteuerungspunkt SCP (SCP = Service Control Point) handeln, wenn das Mobilfunknetz eine Struktur eines Intelligenten Netzes IN (IN = Intelligent Network) aufweist. Es kann sich bei dem Dienstknoten SN jedoch auch beispielsweise um einen "Parlay-Client" genannten Dienstknoten handeln, der unter Nutzung der an sich bekannten Parlay-Technik mit den Mobilfunknetz MFN verbunden ist. Der Dienstknoten SN verfügt nach dem Empfang der Kurznachricht SMS sowohl über die IP-Adresse des Partner-Kommunikationsendgerätes P-KEG als auch über die Rufnummer des Mobil-Kommunikationsendgerätes KEG. Daraufhin sendet der Dienstknoten SN eine die Rufnummer es Mobil-Kommunikationsendgerätes und die IP-Adresse des Partner-Kommunikationsendgerätes enthaltende Auftragsnachricht AN an eine Steuereinheit GK des Kommunikationsnetzes (GK = Gatekeeper). Mit dieser Auftragsnachricht AN wird die Steuereinheit GK beauftragt, eine Verbindung zwischen dem Partner-Kommunikationsendgerät P-KEG des Kommunikationsnetzes KN und dem Mobil-Kommunikationsendgerät KEG des Mobilfunknetzes MFN aufzubauen. Zu diesem Zweck sucht die Steuereinheit GK mit Hilfe der IP-Adresse das Partner-Kommunikationsendgerät P-KEG (Pfeil 1). Aufgrund des Vorliegens der IP-Adresse und der Rufnummer des Mobil-Kommunikationsgerätes ist der Steuereinheit GK bekannt, dass eine Verbindung zwischen dem Kommunikationsnetz KN und dem Mobilfunknetz MFN hergestellt werden soll. Daher sucht die Steuereinheit GK einen diese beiden Netze verbindenden Verbindungsknoten MGW und veranlasst (Pfeil 2) diesen Verbindungsknoten MGW, eine Kommunikationsverbindung KV (beispielsweise eine Sprachverbindung) zwischen dem Partner-Kommunikationsendgerät P-KEG und dem Mobil-Kommunikationsendgerät KEG herzustellen. Daraufhin stellt dieser Verbindungsknoten MGW diese Kommunikationsverbindung KV her; es wird also die Kommunikationsverbindung KV zwischen dem _{M}o-bil-Kommunikationsendgerät KEG des Mobilfunknetzes MFN und dem Partner-Kommunikationsendgerät P-KEG des Kommunikationsnetzes KN hergestellt. Diese Kommunikationsverbindung KV muss nicht notwendigerweise über die Mobilvermittlungsstelle GMSC verlaufen; ebenso können weitere in der Figur nicht dargestellte Vermittlungsstellen am Aufbau der Kommunikationsverbindung KV beteiligt werden. Über diese Kommunikationsverbindung KV ist beispielsweise eine Sprachkommunikation zwischen einem Nutzer des Mobil-Kommunikationsendgerätes KEG und einem Nutzer des Partner-Kommunikationsendgerätes P-KEG durchführbar. Die Kommunikationsverbindung stellt dann einen sog. "Sprachkanal" dar.

Ein alternatives Ausführungsbeispiel kann auch so ausgestaltet sein, dass mittels der Textnachricht SMS lediglich die IP-Adresse des Partner-Kommunikationsendgerätes zu dem Dienstknoten übertragen wird. Aufgrund von ebenfalls mit der Textnachricht SMS übertragenen Absenderdaten/Absenderinformationen wird daraufhin von dem Dienstknoten SN aus einer in dem Mobilfunknetz MFN enthaltenen Datenbank DB die Rufnummer des Mobil-Kommunikationsendgerätes ermittelt. Damit stehen dem Dienstknoten auch bei dieser Alternativlösung sowohl die IP-Adresse des Partner-Kommunikationsendgerätes als auch die Rufnummer des Mobil-Kommunikationsendgerätes zur Verfügung.

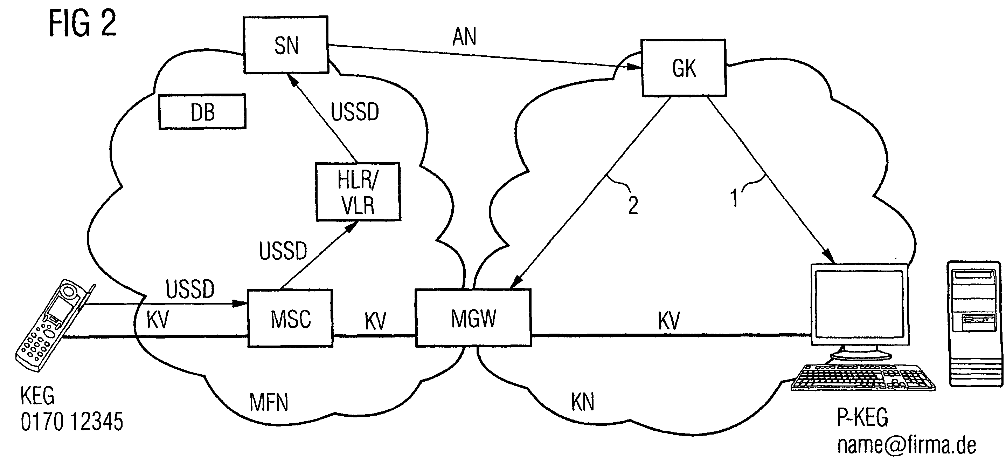

In Figur 2 ist wiederum das bereits aus Figur 1 bekannte Mobilfunknetz MFN und das Kommunikationsnetz KN dargestellt, wobei bei dem Mobilfunknetz MFN in diesem Ausführungsbeispiel zum Teil andere Einheiten genutzt werden als beim Ausführungsbeispiel nach der Figur 1.

Abweichend von dem anhand der Figur 1 dargestellten Ausführungsbeispiel wird bei diesem Ausführungsbeispiel von dem Mobil-Kommunikationsendgerät KEG als Textnachricht ein "USSD-String" USSD erzeugt, welcher die IP-Adresse des Partner-Kom munikationsendgerätes P-KEG enthält. Ein solcher USSD-String stellt eine Zeichenkette (eine Folge von Text-Zeichen) dar und kann beispielsweise den folgenden Aufbau besitzen "*123#name@firma.de#". Dabei stellt der erste Teil "*123#" dieses USSD-Strings einen sog. "USSD Service-Code" dar. Dieser USSD Service-Code gibt an, wie mit den restlichen Daten des USSD Strings (in diesem Fall also mit der IP-Adresse) zu verfahren ist. Zu diesem Zweck ist in einer Speichereinheit des Mobilfunknetzes (beispielsweise im Heimatregister HLR (HLR = Home Location Register) die Information abgelegt, dass ein USSD-String mit dem USSD Service-Code "*123#" an den Dienstknoten SN zu senden ist. Diese Information ist unter dem Namen "Camel-Subscription" bekannt.

Das Mobil-Kommunikationsendgerät KEG sendet nun den USSD-String an eine Vermittlungsstelle MSC (MSC = Mobile Switching Center). Die Vermittlungsstelle MSC leitet daraufhin den USSD-String unter Nutzung der in dem Heimatregister HLR vorhandenen Daten und unter Nutzung des Besucherregisters VLR an den Dienstknoten SN weiter. Der Dienstknoten SN kann nun (analog zu dem im Zusammenhang mit der Figur 1 beschriebenen Ausführungsbeispiel) die Rufnummer des Kommunikationsendgerätes aus der Datenbank DB auslesen oder alternativ kann diese Rufnummer auch mit dem USSD-String mitgeliefert werden. Nun verfügt der Dienstknoten SN sowohl über die Rufnummer des Kommunikationsendgerätes KEG als auch über die IP-Adresse des Partner-Kommunikationsendgerätes P-KEG. Der weitere Ablauf des Verfahrens entspricht dem im Zusammenhang mit der Figur 1 erläuterten Ablauf.

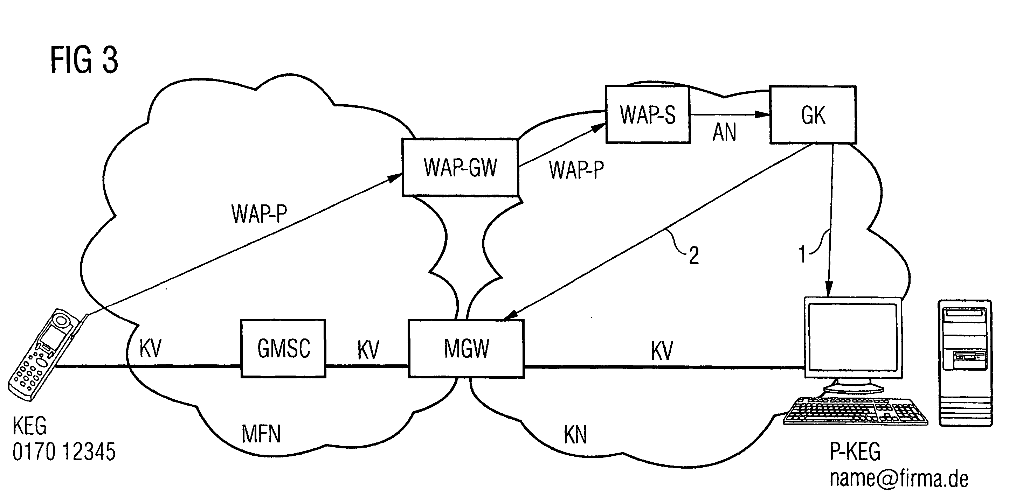

In Figur 3 ist ein Ausführungsbeispiel dargestellt, bei dem als Textnachricht eine Seitennachricht (WAP-Seite, WAP-Page) eines WAP-Dienstes verwendet wird. Diese WAP-Seite wird von dem Mobil-Kommunikationsendgerät KEG auf bekannte Art und Weise von einem WAP-Server angefordert und von diesem zu dem Mobil-Kommunikationsendgerät KEG übertragen; dies ist in der Figur 3 nicht dargestellt. Die WAP-Seite wird auf einer Anzeigeeinheit des Kommunikationsendgerätes KEG angezeigt. Die WAP-Seite kann beispielsweise eine Eingabemaske enthalten, in die ein Nutzer des Kommunikationsendgerätes KEG die IP-Adresse des Partner-Kommunikationsendgerätes und seine eigene Rufnummer (nämlich die des Kommunikationsendgerätes) eingibt. Daraufhin wird die Seitennachricht WAP-P zu dem WAP-Server WAP-S gesendet. Da der WAP-Server WAP-S in diesem Ausführungsbeispiel in dem nach dem Internet-Protokoll arbeitenden Kommunikationsnetz KN angesiedelt ist, wird die Seitennachricht WAP-P über einen WAP-Verbindungsknoten WAP-GW (WAP-GW = WAP Gateway) gesendet, welcher das Mobilfunknetz MFN und das Kommunikationsnetz KN verbindet. Dieser WAP-Verbindungsknoten WAP-GW sendet daraufhin die Seitennachricht WAP-P an den WAP-Server WAP-S weiter. Der WAP-Server WAP-S arbeitet in diesem Ausführungsbeispiel als Dienstknoten SN und sendet die die Rufnummer und die IP-Adresse beinhaltende Auftragsnachricht AN an die Steuereinheit GK des Kommunikationsnetzes. Der weitere Ablauf des Verfahrens entspricht dem bereits beschriebenen Ablauf. Es soll an dieser Stelle darauf hingewiesen werden, dass sich der WAP-Server WAP-S auch außerhalb des Kommunikationsnetzes KN befinden und lediglich mit diesem verbunden sein kann. In diesem Falle würde der WAP-Verbindungsknoten WAP-GW das Mobilfunknetz MFN direkt mit dem WAP-Server WAP-S verbinden.

Die Erfindung betrifft ein Verfahren, mit dem auf Anforderung eines über ein Mobil-Kommunikationsendgerätes des Mobilfunknetzes verfügenden Teilnehmers des Mobilfunknetzes eine Kommunikationsverbindung (z.B. einer Sprach-Kommunikationsverbindung) zwischen dem Mobil-Kommunikationsendgerät und einem Partner-Kommunikationsendgerät eines weiteren Kommunikationsnetzes aufgebaut wird. Dies ist auch dann möglich, wenn in dem Mobilfunknetz Mobilfunkrufnummern (z.B. E.164-Nummern) und in dem Kommunikationsnetz IP-Adressen zur Adressierung der Endgeräte bzw. der Nutzer dieser Endgeräte verwendet werden. Zum Aufbau der Kommunikationsverbindung wird von dem Mobil-Kommunikationsendgerät die IP-Adresse des Partner-Kommunikationsendgerätes in Form einer Textnachricht zu einer Steuereinheit des Kommunikationsnetzes übertragen; daraufhin wird von dem Kommunikationsnetz die Kommunikationsverbindung zwischen dem Partner-Kommunikationsendgerät und dem Mobil-Kommunikationsendgerät hergestellt.

## Patentansprüche

1. Verfahren zum Veranlassen eines Herstellens einer Sprachkommunikationsverbindung (KV) zwischen einem Mobil-Kommunikationsendgerät (KEG) eines Mobilfunknetzes (MFN) und einem Partner-Kommunikationsendgerät (P-KEG) eines gemäß des Internet-Protokolls (IP) arbeitenden Kommunikationsnetzes (KN), wobei dem Mobil-Kommunikationsendgerät (KEG) eine Rufnummer (0170 12345) des Mobilfunknetzes (MFN) und dem Partner-Kommunikationsendgerät (P-KEG) eine IP-Adresse (name@firma.de) des Kommunikationsnetzes (KN) zugeordnet ist, **dadurch gekennzeichnet, dass**
- von einem mit dem Mobilfunknetz (MFN) verbundenen Dienstknoten (SN) eine von dem Mobil-Kommunikationsendgerät (KEG) ausgesandte Textnachricht (SMS,USSD,WAP-P) empfangen wird, welche die IP-Adresse enthält,
- von dem Dienstknoten (SN) aufgrund der IP-Adresse eine Steuereinheit (GK) des Kommunikationsnetzes (KN) ermittelt wird, und
- von dem Dienstknoten (SN) eine die Rufnummer und die IP-Adresse beinhaltende Auftragsnachricht (AN) an diese Steuereinheit (GK) gesendet wird, wodurch die Steuereinheit (GK) beauftragt wird,
- das der IP-Adresse zugeordnete Partner-Kommunikationsendgerät (P-KEG) zu ermitteln,
- einen das Mobilfunknetz (MFN) und das Kommunikationsnetz (KN) verbindenden Verbindungsknoten (MGW) zu ermitteln, und
- den Verbindungsknoten (MGW) zu veranlassen, die Sprachkommunikationsverbindung (KV) zwischen dem Mobil-Kommunikationsendgerät (KEG) und dem Partner-Kommunikationsendgerät (P-KEG) herzustellen.

2. Verfahren nach Anspruch 1,
**dadurch gekennzeichnet, dass**
- die Textnachricht (SMS,USSD,WAP-P) neben der IP-Adresse (name@firma.de) auch die Rufnummer (0170 12345) enthält.

3. Verfahren nach Anspruch 1,
**dadurch gekennzeichnet, dass**
- unter Benutzung von in der Textnachricht (SMS,USSD,WAP-P) enthaltenen Absenderdaten von dem Dienstknoten (SN) aus einem Datenspeicher (DB) des Mobilfunknetzes (MFN) die Rufnummer (0170 12345) ausgelesen wird.

4. Verfahren nach einem der Ansprüche 1 bis 3,
**dadurch gekennzeichnet, dass**
- als Textnachricht (SMS) eine "Short Message" genannte schriftliche Kurznachricht (SMS) verwendet wird.

5. Verfahren nach Anspruch 4,
**dadurch gekennzeichnet, dass**
- die von dem Mobil-Kommunikationsendgerät (KEG) ausgesandte Kurznachricht (SMS) bei einem Kurznachricht-Dienstzentrum (SMSC) des Mobilfunknetzes (MFN) eintrifft, und von diesem Kurznachricht-Dienstzentrum (SMSC) aufgrund des Vorliegens der IP-Adresse in der Kurznachricht (SMS) die Kurznachricht (SMS) zu dem Dienstknoten (SN) weitergeleitet wird.

6. Verfahren nach einem Ansprüche 1 bis 3,
**dadurch gekennzeichnet, dass**
- als Textnachricht (USSD) eine "USSD-String" genannte Zeichenkette (USSD) verwendet wird.

7. Verfahren nach Anspruch 6,
**dadurch gekennzeichnet, dass**
- die von dem Mobil-Kommunikationsendgerät (KEG) ausgesandte Zeichenkette (USSD) bei einer Vermittlungsstelle (MSC) des Mobilfunknetzes (MFN) eintrifft, und von dieser Vermittlungsstelle (MSC) aufgrund einer USSD-Kennung (USSD-Service-Code) der Zeichenkette die Zeichenkette (USSD) zu dem Dienstknoten (SN) weitergeleitet wird.

8. Verfahren nach einem der Ansprüche 1 bis 3,
**dadurch gekennzeichnet, dass**
- als Textnachricht (WAP-P) eine Seitennachricht (WAP-P) eines WAP-Dienstes verwendet wird.

## Claims

1. Method for causing a voice communication link (KV) to be established between a mobile communication terminal (KEG) of a mobile radio network (MFN) and a partner communication terminal (P-KEG) of a communication network (KN) operating in accordance with the Internet Protocol (IP), the mobile communication terminal (KEG) being associated with a directory number (0170 12345) of the mobile radio network (MFN) and the partner communication terminal (P-KEG) being associated with an IP address (name@firma.de) of the communication network (KN), **characterized in that**
- a text message (SMS, USSD, WAP-P), sent out by the mobile communication terminal (KEG) and containing the IP address, is received by a service node (SN) connected to the mobile radio network (MFN),
- the service node (SN) finds a control unit (GK) in the communication network (KN) on the basis of the IP address, and
- the service node (SN) sends a task message (AN) containing the directory number and the IP address to this control unit (GK), as a result of which the control unit (GK) is ordered
- to find the partner communication terminal (P-KEG) associated with the IP address,
- find a connecting node (MGW) connecting the mobile radio network (MFN) and the communication network (KN), and
- cause the connecting node (MGW) to establish the voice communication link (KV) between the mobile communication terminal (KEG) and the partner communication terminal (P-KEG).

2. Method according to Claim 1, **characterized in that**
- the text message (SMS, USSD, WAP-P) also contains the directory number (0170 12345) in addition to the IP address (name@firma.de).

3. Method according to Claim 1, **characterized in that**
- the directory number (0170 12345) is read out of a data memory (DB) of the mobile radio network (MFN) by the service node (SN) by using sender data contained in the text message (SMS, USSD, WAP-P).

4. Method according to one of Claims 1 to 3, **characterized in that**
- a written short message (SMS) is used as the text message.

5. Method according to Claim 4, **characterized in that**
- the short message (SMS) sent out by the mobile communication terminal (KEG) arrives at a short message service centre (SMSC) of the mobile radio network (MFN) and this short message service centre (SMSC) forwards the short message (SMS) to the service node (SN) on the basis of the presence of the IP address in the short message (SMS).

6. Method according to one of Claims 1 to 3, **characterized in that**
- a character string (USSD) called a USSD string is used as the text message (USSD).

7. Method according to Claim 6, **characterized in that**
- the character string (USSD) sent out by the mobile communication terminal (KEG) arrives at a mobile switching centre (MSC) of the mobile radio network (MFN) and this mobile switching centre (MSC) forwards the character string (USSD) to the service node (SN) on the basis of a USSD identifier (USSD service code) of the character string.

8. Method according to one of Claims 1 to 3, **characterized in that**
- a page message (WAP-P) of a WAP service is used as the text message.

## Revendications

1. Procédé pour provoquer un établissement d'une liaison de communication vocale (KV) entre un terminal de communication mobile (KEG) d'un réseau de radiocommunication mobile (MFN) et un terminal de communication partenaire (P-KEG) d'un réseau de communication (KN) travaillant selon le protocole internet (IP), un numéro d'appel (0170 12345) du réseau de radiocommunication mobile (MFN) étant associé au terminal de communication mobile (KEG) et une adresse IP (name@firma.de) du réseau de communication (KN) étant associée au terminal de communication partenaire (P-KEG),
**caractérisé par le fait que**
- un noeud de services (SN) relié au réseau de radiocommunication mobile (MFN) reçoit un message de texte (SMS, USSD, WAP-P) qui a été émis par le terminal de communication mobile (KEG) et qui contient l'adresse IP,
- le noeud de services (SN) détermine en fonction de l'adresse IP une unité de commande (GK) du réseau de communication (KN), et
- le noeud de services (SN) envoie à cette unité de commande (GK) un message de tâche (AN) contenant le numéro d'appel et l'adresse IP, ce qui fait que l'unité de commande (GK) est chargée
-- de déterminer le terminal de communication partenaire (P-KEG) associé à l'adresse IP,
-- de déterminer un noeud de liaison (MGW) reliant le réseau de radiocommunication mobile (MFN) et le réseau de communication (KN), et
-- de faire en sorte que le noeud de liaison (MGW) établisse la liaison de communication vocale (KV) entre le terminal de communication mobile (KEG) et le terminal de communication partenaire (P-KEG).

2. Procédé selon la revendication 1,
**caractérisé par le fait que** le message de texte (SMS, USSD, WAP-P) contient en plus de l'adresse IP (name@firma.de) le numéro d'appel (0170 12345).

3. Procédé selon la revendication 1,
**caractérisé par le fait que**, en utilisant des données d'émetteur contenues dans le message de texte (SMS, USSD, WAP-P), le noeud de services (SN) lit le numéro d'appel (0170 12345) dans une mémoire de données (DB) du réseau de radiocommunication mobile (MFN).

4. Procédé selon l'une des revendications 1 à 3,
**caractérisé par le fait que** l'on utilise comme message de texte (SMS) un message écrit court appelé "Short Message".

5. Procédé selon la revendication 4,
**caractérisé par le fait que** le message court (SMS) émis par le terminal de communication mobile (KEG) arrive à un centre de service de messages courts (SMSC) du réseau de radiocommunication mobile (MFN) et que, en raison de la présence de l'adresse IP dans le message court (SMS), ce centre de service de messages courts (SMSC) retransmet le message court (SMS) au noeud de services (SN).

6. Procédé selon l'une des revendications 1 à 3,
**caractérisé par le fait que** l'on utilise comme message de texte (USSD) une chaîne de caractères (USSD) appelée "USSD-String".

7. Procédé selon la revendication 6,
**caractérisé par le fait que** la chaîne de caractères (USSD) émise par le terminal de communication mobile (KEG) arrive à un centre de commutation (MSC) du réseau de radiocommunication mobile (MFN) et que, en raison d'un identificateur USSD (USSD-Service-Code) de la chaîne de caractères, ce centre de commutation (MSC) retransmet la chaîne de caractères (USSD) au noeud de services (SN).

8. Procédé selon l'une des revendications 1 à 3,
**caractérisé par le fait que** l'on utilise comme message de texte (WAP-P) un message de page (WAP-P) d'un service WAP.
